# EUROPEAN PATENT SPECIFICATION

(11) **EP 2 660 920 B1**
(45) Date of publication and mention of the grant of the patent: **27.03.2019**
(21) Application number: 13150402.9
(22) Date of filing: 07.01.2013
(51) Int. Cl.: H01M 10/0567, H01M 10/42, C07F 9/6593, H01M 10/052

(54) **ELECTROLYTE INCLUDING AN ELECTROLYTE ADDITIVE AND RECHARGEABLE LITHIUM BATTERY INCUDING SAID ELECTROLYTE**
ELEKTROLYT MIT EINEM ELEKTROLYT-ZUSATZSTOFF UND WIEDERAUFLADBARE LITHIUM-BATTERIE, DIE DIESEN ELEKTROLYT ENTHÄLT
ELECTROLYTE COMPRENANT UN ADDITIF D'ELECTROLYTE ET UNE BATTERIE AU LITHIUM RECHARGEABLE COMPRENANT CE ELECTROLYTE

(30) Priority: 04.05.2012 US 201261643102 P; 19.12.2012 US 201213720028
(43) Date of publication of application: 06.11.2013
(73) Proprietor: Samsung SDI Co., Ltd., Yongin-si, Gyeonggi-do (KR)
(72) Inventor: Shatunov, Pavel, Gyeonggi-do (KR); Shin, Woo-Cheol, Gyeonggi-do (KR); Khasanov, Makhmut, Gyeonggi-do (KR); Chernyshov, Denis, Gyeonggi-do (KR); Tereshchenko, Alexey, Gyeonggi-do (KR); Egorov, Vladimir, Gyeonggi-do (KR)
(74) Representative: Russell, Tim

(56) References cited:
- EP-A1- 2 325 936
- EP-A1- 2 763 231
- WO-A1-2013/047342
- GB-A- 1 388 430
- EDGAR NIECKE ET AL: "2.4.4.6.6-Pentaf luor-l.3.5.2.4.6-triazaphosphor(V)inyl-(2) - amine und -hydrazine (, ,Pentafluorcyclotriphosphazoamine und -hydrazine' ' )", CHEMISCHE BERICHTE, vol. 104, no. 12, 31 December 1971 (1971-12-31), pages 3729-3739, XP055072986,
- TRISTRAM CHIVERS ET AL: "A Convenient Route to Monosubstituted and Non-geminal Derivatives of Phosphonitrilic Fluorides", CHEMICAL COMMUNICATIONS, vol. 7, 31 December 1969 (1969-12-31), pages 337-337, XP055072996,

## Description

The present invention relates to an electrolyte solution including an electrolyte additive, and to a rechargeable lithium battery including the electrolyte solution. The invention also relates to the use of the electrolyte additive as a flame retardant additive in an electrolyte of a rechargeable lithium battery.

Batteries transform chemical energy generated from an electrochemical redox reaction of a chemical material in the battery into electrical energy. Such batteries are classified as primary batteries, which should be disposed after the energy of the battery is all consumed, and rechargeable batteries, which can be recharged many times. A rechargeable battery can be charged/discharged many times based on the reversible transformation between chemical energy and electrical energy.

Recent developments in high-tech electronics have allowed electronic devices to become small and light in weight, which leads to an increase in portable electronic devices. As a power source for such portable electronic devices, the demand for batteries with high energy density is increasing and research on lithium rechargeable batteries is progressing rapidly.

GB 1,388,430 relates to a process for controlling pests and substituted fluorophosphazenes, to novel fluorophosphazenes, and to pesticidal compositions containing these compounds as active ingredients.

Edgar Niecke et al., Chemische Berichte, vol. 104, no. 12, 31 December 1971, pages 3729-3739, XP055071986, relates to the reaction of P₃N₃F₆ with amine molecules, and the products thereof.

Tristram Chiver et al., Chemical Communications, vol. 7, 31 December 1969, page 337, XP055072996, relates to the reaction between (dimethylamino)trimethylsilane and the phosphonitrilic series (NPF₂)ₙ (n=3-6).

EP2325936 A1 shows an electrolyte for a lithium battery comprising a nonaqueous organic solvent, a lithium salt, a first compound and a second compound, wherein the first compound is a linear ether with alkyl, alkenyl, or alkynyl groups, which may be substituted with one or more fluorine atoms and wherein the number ratio of fluorine atoms to hydrogen atoms in the first compound is 1 or above; and the second compound is a cyclic phosphazene having a six-membered ring, wherein the phosphorous is substituted with either fluorine or alkoxy, alkenoxy, or alkynoxy groups which may be at least partially substituted with fluorine, hydroxyl and carboxyl groups, with the proviso that the substituents of the phosphazene ring cannot simultaneously be fluorine or simultaneously be said alkoxy, alkenoxy, or alkynoxy groups, and a lithium battery including the electrolyte.

EP2763231 A1, which is a document representing the state of the art as defined by Article 54(3) EPC, provides a nonaqueous electrolyte solution, which can improve flame retardancy and ameliorate performances of a battery without deteriorating the basic battery performance as far as possible, and a secondary battery. The nonaqueous electrolyte solution is a nonaqueous electrolyte solution for a secondary battery that contains metal salts including ions of metals belonging to group 1 or 2 of the periodic table and a specific cyclic compound having phosphorus and nitrogen atoms in a non-protonic solvent.

A rechargeable lithium battery is fabricated by injecting electrolyte into a battery cell, which includes a positive electrode including a positive active material capable of intercalating/ deintercalating lithium and a negative electrode including a negative active material capable of intercalating/deintercalating lithium.

An electrolyte includes an organic solvent in which a lithium salt is dissolved and critically determines stability and performance of a rechargeable lithium battery. Particularly, stability is important in a large capacity rechargeable lithium battery.

According to a first aspect of the present invention, an electrolyte solution for a rechargeable lithium battery comprising a lithium salt, a non-aqueous organic solvent, and additive represented by the following Chemical Formula 1 is provided.

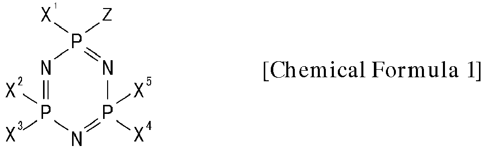

In Chemical Formula 1,
X¹ to X⁵ are each independently a halogen atom, and
Z is a disubstituted amino group represented by following Chemical Formula 1a.

*- NR¹R² [Chemical Formula 1a]

In Chemical Formula 1a,
R¹ and R² are each independently a substituted or unsubstituted C1 to C6 alkyl group;
wherein the electrolyte additive is included in an amount of 10 to 15 volume % based on the total volume of the electrolyte solution.

At least one of X¹ to X⁵ may be fluorine. In an embodiment, X¹ to X⁵ may be each independently fluorine.

The electrolyte additive may be monosubstituted pentafluorocyclotriphosphazene.

According to a second aspect of the present invention, provided is a rechargeable lithium battery that comprises a positive electrode comprising a positive active material, a negative electrode comprising a negative active material, and the electrolyte according to the first aspect of the invention described above.

According to a third aspect of the present invention there is provided use of a compound represented by chemical formula 1 as a flame retardant additive in an electrolyte solution of a rechargeable lithium battery: 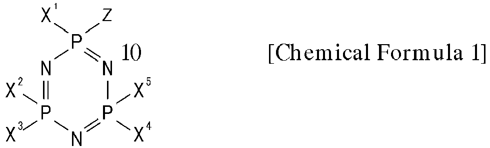 wherein, in chemical formula 1, X¹ to X⁵ are each independently a halogen atom; and
Z is represented by chemical formula 1a:

*-NR¹R² Chemical Formula 1a

wherein,
R¹ and R² are each independently selected from the group consisting of a substituted or unsubstituted C1 to C6 alkyl group;
wherein the compound is included in an amount of 10 to 15 volume % based on the total volume of the electrolyte solution.

Performance of a battery may be maintained while securing stability due to improvement of flame retardancy.

A more complete appreciation of the present invention, and many of the attendant advantages thereof, will be readily apparent as the same becomes better understood by reference to the following detailed description when considered in conjunction with the accompanying drawings, wherein:

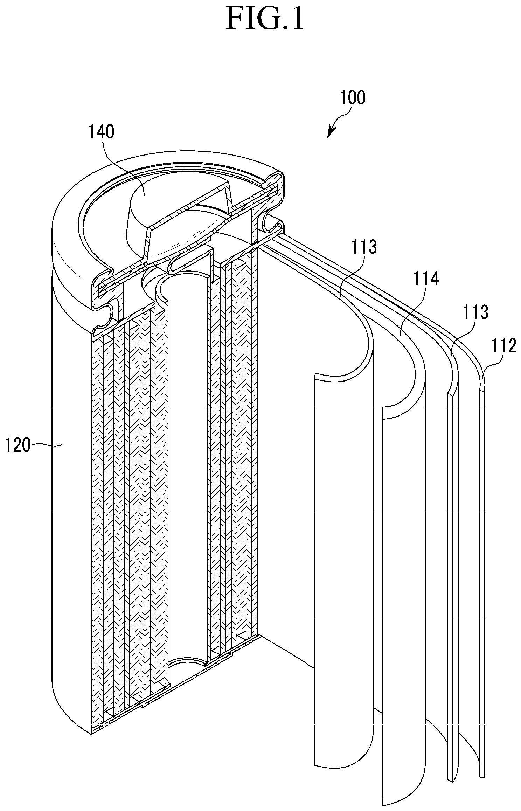

FIG. 1 is a schematic view showing a rechargeable lithium battery according to an embodiment.

This disclosure will be described more fully hereinafter, in which exemplary embodiments of the invention are shown.

As used herein, when a definition is not otherwise provided, the term 'substituted' may refer to one substituted with a substituent selected from a halogen atom (F, Br, Cl, or I), a hydroxyl group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, and a combination thereof.

As used herein, when a definition is not otherwise provided, the term 'hetero' may refer to one including 1 to 3 heteroatoms selected from, N, O, S, and P.

The electrolyte additive used in the present invention is a compound represented by the following Chemical Formula 1.

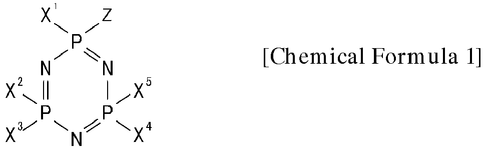

In Chemical Formula 1,
X¹ to X⁵ are each independently a halogen atom, and
Z is a disubstituted amino group, represented by the following Chemical Formula 1a.

*-NR¹R² [Chemical Formula 1a]

In Chemical Formula 1a,
R¹ and R² are each independently a substituted or unsubstituted C1 to C6 alkyl group.

The compound represented by Chemical Formula 1 is a cyclotriphosphazene derivative, and the compound includes three phosphorus atoms (P) and three nitrogen atoms (N) that form a ring. Two of the three phosphorus atoms (P) are connected with a halogen atom or halogen-containing group and the other phosphorus atom (P) is connected with a halogen atom or halogen-containing group and an amino group represented by chemical formula 1a.

The electrolyte additive represented by Chemical Formula 1 may be monosubstituted halogenated cyclotriphospazene.

Herein, X¹ to X⁵ of Chemical Formula 1 may each independently be, for example, fluorine to provide monosubstituted pentafluorocyclotriphosphazene.

R¹ and R² of Chemical Formula 1 are each independently a substituted or unsubstituted C1 to C6 alkyl group.

The electrolyte additive represented by Chemical Formula 1 is added to the electrolyte so as to improve flame retardancy of the electrolyte while not affecting the performance of a battery.

The electrolyte solution for a rechargeable lithium battery according to an aspect comprises an additive represented by the Chemical Formula 1, a non-aqueous organic solvent, and a lithium salt.

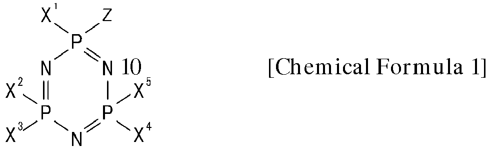

In Chemical Formula 1,
X¹ to X⁵ are each independently a halogen atom, and
Z is a disubstituted amino group, represented by following Chemical Formula 1a.

*-NR¹R² [Chemical Formula 1a]

In Chemical Formula 1a,
R¹ and R² are each independently a substituted or unsubstituted C1 to C6 alkyl group
wherein the compound is included in an amount of 10 to 15 volume % based on the total volume of the electrolyte solution.

The electrolyte additive represented by Chemical Formula 1 may be monosubstituted halogenated cyclotriphosphazene, and when X¹ to X⁵ of Chemical Formula 1 are each independently fluorine, the electrolyte additive may be monosubstituted pentafluorocyclotriphosphazene.

R1 and R2 are each independently a substituted or unsubstituted C1 to C6 alkyl group.

The additive may be included in an amount of 10 to 15 volume % based on the total amount of the electrolyte solution. When the additive is included in the electrolyte solution within this range, flame retardancy of the electrolyte may be improved while not deteriorating the performance of a battery.

The non-aqueous organic solvent plays a role of transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like, and the ester-based solvent may include methyl acetate, ethyl acetate, n-propyl acetate, dimethylacetate, methylpropionate, ethylpropionate, gamma-butyrolactone, decanolide, gamma-valerolactone, mevalonolactone, caprolactone, and the like.

The ether-based solvent may include dibutyl ether, tetraglyme, diglyme, dimethoxyethane, 2-methyltetrahydrofuran, tetrahydrofuran and the like, and the ketone-based solvent may include cyclohexanone, and the like.

The alcohol-based solvent may include ethanol, isopropyl alcohol, and the like. The aprotic solvent may include nitriles such as R-CN (wherein R is a C2 to C20 linear, branched, or cyclic hydrocarbon group, and may include a double bond, an aromatic ring, or an ether bond), amides such as dimethylformamide, dimethylacetamide, dioxolanes such as 1,3-dioxolane, sulfolanes, and the like.

The non-aqueous organic solvent may be used singularly or in a mixture. When the organic solvent is used in a mixture, its mixture ratio can be controlled in accordance with desirable performance of a battery.

The carbonate-based solvent may include a mixture of a cyclic carbonate and a linear carbonate. The cyclic carbonate and the linear carbonate may be mixed together in a volume ratio of about 1:1 to about 1:9, which may enhance performance of an electrolyte. In addition, the non-aqueous organic solvent may be prepared by further adding the aromatic hydrocarbon-based solvent to the carbonate-based solvent. The carbonate-based solvent and the aromatic hydrocarbon-based solvent may be mixed together in a volume ratio of about 1:1 to about 30:1. The aromatic hydrocarbon-based organic solvent may be selected from the group consisting of benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The lithium salt is dissolved in the non-aqueous organic solvent and supplies lithium ions in a rechargeable lithium battery, and basically operates the rechargeable lithium battery and improves lithium ion transfer between positive and negative electrodes. Such a lithium salt includes one or more of LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (wherein, x and y are natural numbers), LiCl, and LiI.

The lithium salt may be used at a concentration of about 0.1 to about 2.0M. When the lithium salt is included within the above concentration range, it may improve electrolyte performance and lithium ion mobility due to optimal electrolyte conductivity and viscosity.

The electrolyte may further include an additive selected from lithium bis(oxalate)borate (LiBOB), lithium bis(salicylato)borate (LiBSB), and a combination thereof. The lithium bis(oxalate)borate (LiBOB) and/or lithium bis(salicylato)borate (LiBSB) improves thermal stability of an electrolyte and cycle capability of a battery.

Hereinafter, a rechargeable lithium battery according to an embodiment is described with reference to FIG. 1.

FIG. 1 is a schematic view of a rechargeable lithium battery according to an embodiment.

Referring to FIG. 1, a rechargeable lithium battery 100 according to an embodiment includes a battery cell including a positive electrode 114, a negative electrode 112 facing the positive electrode 114, a separator 113 interposed between the positive electrode 114 and negative electrode 112, and an electrolyte for a rechargeable lithium battery (not shown) impregnating the positive electrode 114, negative electrode 112, and separator 113, a battery case 120 including the battery cell, and a sealing member 140 sealing the battery case 120.

The rechargeable lithium battery 100 is fabricated by sequentially laminating a negative electrode 112, a positive electrode 114, and a separator 113, spirally winding them, and housing the spiral-wound product in a battery case 120.

The negative electrode 112 may include a current collector and a negative active material layer disposed on at least one side of the current collector.

The current collector may include a copper foil, a nickel foil, a stainless steel foil, a titanium foil, a nickel foam, a copper foam, a polymer substrate coated with a conductive metal, or a combination thereof.

The negative active material layer includes a negative active material, optionally a binder and optionally, a conductive material.

The negative active material may include a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may include a carbon material. The carbon material may be any generally-used carbon-based negative active material for a lithium ion rechargeable battery. Examples of the carbon material include crystalline carbon, amorphous carbon, and mixtures thereof. The crystalline carbon may be non-shaped or sheet, flake, spherical, or fiber shaped natural graphite or artificial graphite. The amorphous carbon may be a soft carbon (carbon obtained by sintering at a low temperature), a hard carbon, mesophase pitch carbonization products, fired coke, and the like.

Examples of the lithium metal alloy include lithium and a metal of Na, K, Rb, Cs, Fr, Be, Mg, Ca, Sr, Si, Sb, Pb, In, Zn, Ba, Ra, Ge, Al, or Sn.

The material capable of doping and dedoping lithium may include Si, SiOₓ (0 < x < 2), a Si-C composite, a Si-Q alloy (wherein Q is an alkali metal, an alkaline-earth metal, a Group 13 to Group 16 element, a transition element, a rare earth element, or a combination thereof, and is not Si), Sn, SnO₂, a Sn-C composite, Sn-R (wherein R is an alkali metal, an alkaline-earth metal, a Group 13 to Group 16 element, a transition element, a rare earth element, or a combination thereof, and not Sn), and the like. The elements Q and R may include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The transition metal oxide may include vanadium oxide, lithium vanadium oxide, and the like.

The binder improves properties of binding active material particles with one another and a negative active material with a current collector. Examples of the binder include polyvinylalcohol, carboxymethylcellulose, hydroxypropylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves electrical conductivity of a negative electrode. Any electrically conductive material can be used as a conductive agent, unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative, and the like; or a mixture thereof.

The positive electrode 114 includes a current collector and a positive active material layer disposed on the current collector.

The current collector may be an Al, but is not limited thereto.

The positive active material layer includes a positive active material, optionally a binder, and optionally a conductive material.

The positive active material includes lithiated intercalation compounds that reversibly intercalate and deintercalate lithium ions. The positive active material may include a composite oxide including at least one selected from the group consisting of cobalt, manganese, and nickel, as well as lithium. Specific examples may be the compounds represented by the following chemical formulae: LiₐA_{1-b}R_{b}D₂ (wherein, in the above Chemical Formula, 0.90 ≤ a ≤ 1.8 and 0 ≤ b ≤ 0.5); LiₐE_{1-b}R_{b}O_{2-c}D_{c} (wherein, in the above Chemical Formula, 0.90 ≤ a ≤ 1.8, 0 ≤ b ≤ 0.5 and 0 ≤ c ≤ 0.05); LiE_{2-b}R_{b}O_{4-c}D_{c} (wherein, in the above Chemical Formula, 0 ≤ b ≤ 0.5, 0 ≤ c ≤ 0.05); LiₐNi_{1-b-c}Co_{b}R_{c}D_{α} (wherein, in the above Chemical Formula, 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (wherein, in the above Chemical Formula, 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (wherein, in the above Chemical Formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (wherein, in the above Chemical Formula, 0.90 ≤ a ≤ 1.8,0 ≤ b ≤ 0.5, 0 ≤ c ≤ 0.05 and 0 < α ≤ 2); LiₐNi_{1-b-c}Mn_{b}R_{c}O_{2-α}Z_{α} (wherein, in the above Chemical Formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (wherein, in the above Chemical Formula, 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein, in the above Chemical Formula, 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GₑO2 (wherein, in the above Chemical Formula, 0.90 ≤ a ≤ 1.8,0 ≤ b ≤ 0.9, 0 ≤ c ≤ 0.5, 0 ≤ d ≤0.5 and 0.001 ≤ e ≤ 0.1); LiₐNiG_{b}O₂ (wherein, in the above Chemical Formula, 0.90 ≤ a ≤ 1.8 and 0.001 ≤ b ≤ 0.1); LiₐCoG_{b}O₂ (wherein, in the above Chemical Formula, 0.90 ≤ a ≤ 1.8 and 0.001 ≤ b ≤ 0.1); LiₐMnG_{b}O₂ (wherein, in the above Chemical Formula, 0.90 ≤ a ≤ 1.8 and 0.001 ≤ b ≤ 0.1); LiₐMn₂G_{b}O₄ (wherein, in the above Chemical Formula, 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the above Chemical Formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

The positive active material may be a compound with a coating layer on the surface or a mixture of the active material and a compound with a coating layer thereon. The coating layer may include at least one coating element compound selected from the group consisting of an oxide and a hydroxide of the coating element, an oxyhydroxide of the coating element, an oxycarbonate of the coating element, and a hydroxycarbonate of the coating element. The compound for the coating layer may be either amorphous or crystalline. The coating element included in the coating layer may be Mg, Al, Co, K, Na, Ca, Si, Ti, V, Sn, Ge, Ga, B, As, Zr, or a mixture thereof. The coating process may include any conventional processes unless it causes any side effects on the properties of the positive active material (e.g., spray coating, immersing), which is well known to those who have ordinary skill in this art and will not be illustrated in detail.

The binder improves binding properties of the positive active material particles to one another and to a current collector. Examples of the binder include polyvinylalcohol, carboxymethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The conductive material improves electrical conductivity of a negative electrode. Any electrically conductive material can be used as a conductive agent unless it causes a chemical change. Examples of the conductive material include natural graphite, artificial graphite, carbon black, acetylene black, ketjen black, a carbon fiber, a metal powder or a metal fiber including copper, nickel, aluminium, silver, and the like. A conductive material such as a polyphenylene derivative and the like may be mixed.

The negative and positive electrodes may be fabricated in a method of preparing an active material composition by mixing the active material and a binder, and optionally a conductive material, and coating the active material composition on a current collector. The solvent may include N-methylpyrrolidone or the like but is not limited thereto. The electrode manufacturing method is well known and thus, is not described in detail in the present specification.

The separator 113 separates the positive electrode 114 and negative electrode 112 and provides a path for transferring lithium ions. The separator 113 may be any separator that is generally used in a lithium ion battery. In other words, the separator may have low resistance against electrolyte ions and excellent moisturizing capability of an electrolyte. For example, the separator may be selected from a glass fiber, polyester, TEFLON (tetrafluoroethylene), polyethylene, polypropylene, polytetrafluoroethylene (PTFE), or a combination thereof and may have a non-woven fabric type or a fabric type. For example, a polyolefin-based polymer separator such as polyethylene, polypropylene, and the like is used for a lithium ion battery, a separator coated with a ceramic component or a polymer material may be used to secure heat resistance or mechanical strength. The separator may have a single layer or multiple layers.

The rechargeable lithium battery may be classified as a lithium ion battery, a lithium ion polymer battery, and a lithium polymer battery according to the presence of a separator and the kind of an electrolyte used therein. The rechargeable lithium battery may have a variety of shapes and sizes and thus, may include a cylindrical, prismatic, coin, or pouch-type battery and a thin film type or a bulky type in size. The structure and fabricating method for a lithium ion battery pertaining to the present invention are well known in the art.

The electrolyte is the same as described above.

The following examples illustrate the present invention described above, in more detail.

### Preparation of Additive

### Synthesis Example 1

A solution comprising 15.66 g (63 mmol) of hexafluorocyclotriphosphazene was dissolved in 79 ml of diethyl ether was prepared, and 63 ml (126 mmol) of dimethylamine solution (in THF, 2M) was added to the solution at 0°C for 1 hour. The mixture was agitated overnight at room temperature. The solution was decanted from precipitate and the precipitate was washed with ether. Subsequently, combined solutions (decanted one and washings) were evaporated, and a residual oil was distilled twice to obtain 8.86 g of a compound represented by the following Chemical Formula 1A. The yield was 51.3%. Boiling point is 94-95 °C/175 Torr.

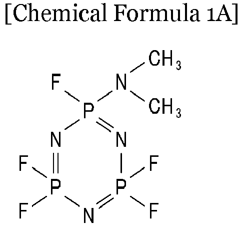

### Synthesis Example 2

A solution comprising 14.94 g (60 mmol) of hexafluorocyclotriphosphazene was dissolved in 100 ml of diethyl ether was prepared, and 8.78 g (120 mmol) of diethylamine was added to the solution at 0°C for 1 hour. The mixture was agitated overnight at room temperature. The solution was decanted from precipitate and the precipitate was washed with ether. Subsequently, combined solutions (decanted one and washings) were concentrated under reduced pressure and then a residual oil was distilled twice to obtain 5.56 g of a compound represented by the following Chemical Formula 1B. The yield was 30.7%. Boiling point is 125-128°C/175 Torr.

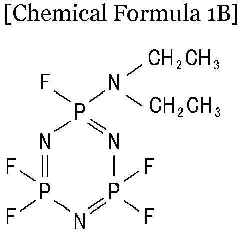

### Comparative Synthesis Example 1

A solution comprising 5.91 g (100 mmol) of propylamine dissolved in 100 ml of diethyl ether was added drop-by-drop to a solution comprising 12.45 g (50 mmol) of hexafluorocyclotriphosphazene dissolved in 100 ml of diethyl ether at 0°C for 2 hours. The mixture was stirred overnight at room temperature. The solution was decanted from a sticky precipitate and later was washed with ether. The combined ether solutions were washed with water and dried over anhydrous magnesium sulfate. Subsequently, diethyl ether was evaporated and a residual oil was distilled twice to obtain 5.86g of a compound represented by the following Chemical Formula 2. The yield was 40.7%. Boiling point is 80°C/23 Torr.

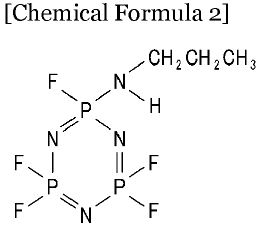

### Comparative Synthesis Example 2

1.66 g (8.8 %) of a compound represented by the following Chemical Formula 3 was obtained through two-stage fractional distillation of a residual material remained after distilling off the mono-substituted product of Synthesis Example 1. Boiling point is 90-92°C/10 Torr.

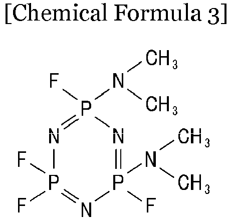

### Preparation of Electrolyte

### Example 1

An electrolyte for a rechargeable lithium battery was prepared by adding 1.3M LiPF₆ lithium salt to a mixed solvent where ethylene carbonate (EC), ethylmethylcarbonate (EMC) and dimethylcarbonate (DMC) were mixed at a ratio of 3/4/3 (v/v/v), and by adding 10 volume% of the additive obtained in Synthesis Example 1 to the mixture.

### Example 2

An electrolyte for a rechargeable lithium battery was prepared according to the same method as Example 1, except that the additive obtained in Synthesis Example 2 was used instead of the additive obtained in Synthesis Example 1.

### Comparative Example 1

An electrolyte for a rechargeable lithium battery was prepared according to the same method as Example 1, except that no additive was included.

### Comparative Example 2

An electrolyte for a rechargeable lithium battery was prepared according to the same method as Example 1, except that the additive obtained in Comparative Synthesis Example 1 was used instead of the additive obtained in Synthesis Example 1.

### Comparative Example 3

An electrolyte for a rechargeable lithium battery was prepared according to the same method as Example 1, except that the additive obtained in Comparative Synthesis Example 2 was used instead of the additive obtained in Synthesis Example 1.

### Evaluation 1: Flame Retardancy

### Evaluation of Flame Retardancy Using Glass Fiber Filter

Flame retardancies of the electrolytes according to Examples 1 and 2 and Comparative Examples 1 to 3 were evaluated. The flame retardancies were evaluated by getting glass fiber filters (WHATMAN®, GF/C, 4.7cm, 1.2µm) wet with the electrolytes according to Examples 1 and 2 and Comparative Examples 1 to 3, igniting the glass fiber filters, and measuring the time that the glass fiber filters were burnt. The time may be represented by self-extinguishing time (SET) and it is denoted with time (s/ml) per unit volume.

The results are shown in Table 1.

**[Table 1]**

| | SET (s/ml) | | SET (s/ml) |
|---|---|---|---|
| Example 1 | 14.6 | Comparative Example 1 | 18.3 |
| Example 2 | 17 | Comparative Example 2 | 15.6 |
| | | Comparative Example 3 | 18 |

It may be seen from Table 1 that the electrolytes according to Examples 1 and 2 had shorter self-extinguishing time than the electrolytes according to Comparative Examples 1 to 3. The electrolytes according to Examples 1 and 2 had superior flame retardancy to the electrolytes according to Comparative Examples 1 to 3.

### Evaluation of Flame Retardancy Using Coin Cell

0.250 ml of each of the electrolytes prepared according to Examples 1 and 2 and Comparative Examples 1 to 3 was poured onto the bottom surface of coin cell case 2032 (Hohsen Corp.), respectively, and ignited, and its burning time was measured. The time may be represented by self-extinguishing time (SET), and denoted with time per unit weight (s/g).

The results are as shown in Table 2.

**[Table 2]**

| | SET (s/g) | | SET (s/g) |
|---|---|---|---|
| Example 1 | 0 | Comparative Example 1 | 99 |
| Example 2 | 0 | Comparative Example 2 | 78 |
| | | Comparative Example 3 | 79 |

Referring to Table 2, whereas the electrolytes according to Examples 1 and **2** were not ignited in the coin cells and showed excellent flame retardancy, the electrolytes according to Comparative Examples 1 to 3 maintained the ignition state for longer than one minute and showed poor flame retardancy.

### Evaluation 2: Evaluation of Cycle Capability

Rechargeable lithium battery cells were fabricated using the electrolytes according to Examples 1 and **2** and Comparative Example 1. Herein, 92 wt% of NCM₄₃₃ - NCM111 (1:4 wt/wt), 4wt % of Denka black, and 4 wt% of polyvinylidenefluoride (PVdF, Solef6020) were used as a positive electrode, and a graphite negative active material coated with alumina was used as a negative electrode.

Rechargeable lithium battery cells including the electrolytes according to Examples 1 and 2 and Comparative Example 1 were charged and discharged 100 times at 25°C with 1C (operation voltage: 2.7V to 4.2V), and discharge capacity for each cycle was measured.

The capacity retentions after 100 cycles were as shown in Table 3.

**[Table 3]**

| | Capacity retention (%) |
|---|---|
| Example 1 | 91 |
| Example 2 | 95 |
| Comparative Example 1 | 92 |

It may be seen from Table 3 that after 100 cycles, the rechargeable lithium battery cells using the electrolytes according to Examples 1 and 2 acquired a similar capacity retention to that of the rechargeable lithium battery cell using the electrolyte according to Comparative Example 1, which was the electrolyte including no additive.

It may be understood that the electrolytes according to Examples 1 and 2 do not deteriorate the performance of a battery cell while improving flame retardancy.

While the present invention has been described in connection with certain exemplary embodiments thereof, it is to be understood that the invention is not limited to the disclosed embodiments but, on the contrary, is intended to cover various modifications and equivalent arrangements included within the scope of the appended claims.

## Claims

1. An electrolyte solution for a rechargeable lithium battery, comprising:
a non-aqueous organic solvent;
a lithium salt; and
an electrolyte additive represented by chemical formula 1: 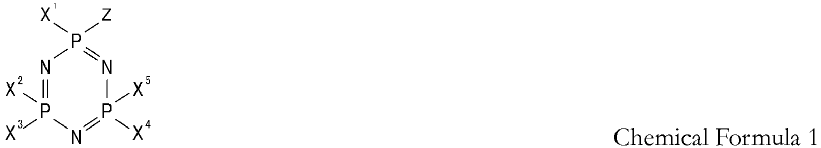 wherein, in chemical formula 1, X¹ to X⁵ are each independently a halogen atom; and
Z is represented by chemical formula 1a:
*-NR¹R² Chemical Formula 1a
wherein, R¹ and R² are each independently selected from the group consisting of a substituted or unsubstituted C1 to C6 alkyl group;
wherein the electrolyte additive is included in an amount of 10 to 15 volume % based on the total volume of the electrolyte solution.

2. An electrolyte solution as claimed in claim 1, wherein in Chemical Formula 1, at least one of X¹ to X⁵ is a fluorine atom.

3. An electrolyte solution as claimed in claim 2, wherein in Chemical Formula 1, X¹ to X⁵ are each a fluorine atom.

4. A rechargeable lithium battery comprising:
a positive electrode comprising a positive active material;
a negative electrode comprising a negative active material; and
an electrolyte solution as claimed in any one of claims 1 to 3.

5. Use of a compound represented by chemical formula 1 as a flame retardant additive in an electrolyte solution of a rechargeable lithium battery: 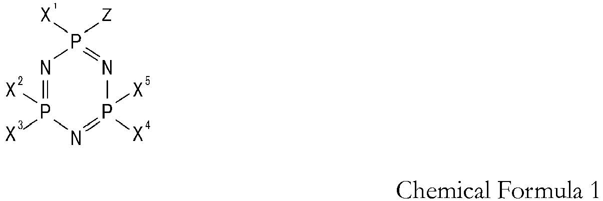 wherein, in chemical formula 1, X¹ to X⁵ are each independently a halogen atom; and
Z is represented by chemical formula 1a:
*-NR¹R² Chemical Formula 1a
wherein, R¹ and R² are each independently selected from the group consisting of a substituted or unsubstituted C1 to C6 alkyl group;
wherein the compound is included in an amount of 10 to 15 volume % based on the total volume of the electrolyte solution.

## Patentansprüche

1. Elektrolytlösung für eine wiederaufladbare Lithium-Batterie, umfassend:
ein nichtwässriges organisches Lösungsmittel;
ein Lithiumsalz; und
einen Elektrolyt-Zusatzstoff, dargestellt durch die chemische Formel 1: 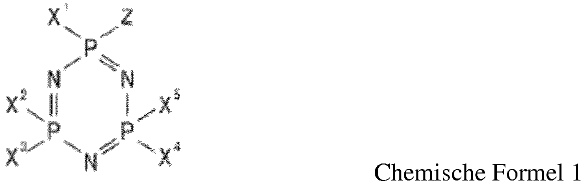 wobei, in der chemischen Formel 1, X¹ bis X⁵ jeweils unabhängig voneinander ein Halogenatom sind; und Z durch die chemische Formel 1a dargestellt wird:
*-NR¹R² Chemische Formel la
wobei R¹ und R² jeweils unabhängig voneinander ausgewählt sind aus der Gruppe bestehend aus einem substituierten oder unsubstituierten C₁- bis C₆-Alkylrest;
wobei der Elektrolyt-Zusatzstoff in einer Menge von 10 bis 15 Vol.-%, bezogen auf das Gesamtvolumen der Elektrolytlösung, enthalten ist.

2. Elektrolytlösung nach Anspruch 1, wobei in der chemischen Formel 1 mindestens eines von X¹ bis X⁵ ein Fluoratom ist.

3. Elektrolytlösung nach Anspruch 2, wobei in der chemischen Formel 1 X¹ bis X⁵ jeweils ein Fluoratom sind.

4. Wiederaufladbare Lithium-Batterie, umfassend:
eine positive Elektrode, umfassend ein Positiv-Aktivmaterial;
eine negative Elektrode, umfassend ein Negativ-Aktivmaterial; und
eine Elektrolytlösung nach einem der Ansprüche 1 bis 3.

5. Verwendung einer Verbindung, dargestellt durch die chemische Formel 1, als flammhemmender Zusatzstoff in einer Elektrolytlösung einer wiederaufladbaren Lithium-Batterie: 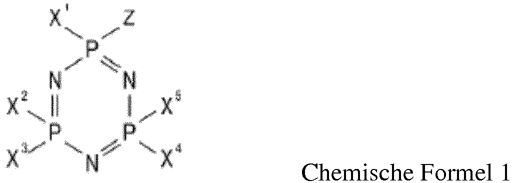 wobei, in der chemischen Formel 1, X¹ bis X⁵ jeweils unabhängig voneinander ein Halogenatom sind; und Z durch die chemische Formel 1a dargestellt wird:
*-NR¹R² Chemische Formel la
wobei R¹ und R² jeweils unabhängig voneinander ausgewählt sind aus der Gruppe bestehend aus einem substituierten oder unsubstituierten C₁- bis C₆-Alkylrest;
wobei die Verbindung in einer Menge von 10 bis 15 Vol.-%, bezogen auf das Gesamtvolumen der Elektrolytlösung, enthalten ist.

## Revendications

1. Solution d'électrolyte destinée à une batterie au lithium rechargeable, comprenant :
un solvant organique non aqueux ;
un sel de lithium ; et
un additif d'électrolyte répondant à la formule chimique 1 : 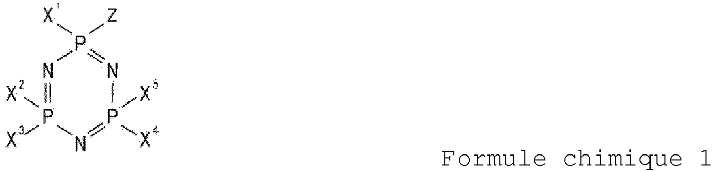 où, dans la formule chimique 1, X¹ à X⁵ sont chacun indépendamment un atome d'halogène ; et
Z est représenté par la formule chimique la :
*-NR¹R² Formule chimique 1a,
où R¹ et R² sont chacun indépendamment sélectionnés dans le groupe constitué d'un groupe alkyle en C1 à C6 substitué ou non substitué ;
dans laquelle l'additif d'électrolyte est incorporé en une proportion de 10 à 15 % en volume par rapport au volume total de la solution d'électrolyte.

2. Solution d'électrolyte selon la revendication 1, dans laquelle, dans la formule chimique 1, au moins l'un de X¹ à X⁵ est un atome de fluor.

3. Solution d'électrolyte selon la revendication 2, dans laquelle, dans la formule chimique 1, X¹ à X⁵ sont chacun un atome de fluor.

4. Batterie au lithium rechargeable comprenant :
une électrode positive comprenant un matériau actif positif ;
une électrode négative comprenant un matériau actif négatif ; et
une solution d'électrolyte selon l'une quelconque des revendications 1 à 3.

5. Utilisation d'un composé répondant à la formule chimique 1 en tant qu'additif ignifuge dans une solution d'électrolyte d'une batterie au lithium rechargeable : 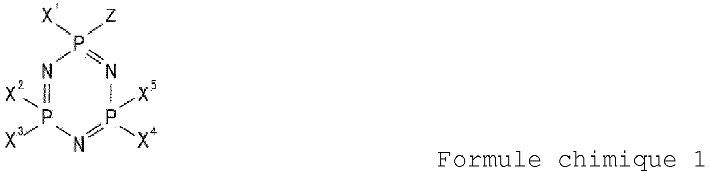 où, dans la formule chimique 1, X¹ à X⁵ sont chacun indépendamment un atome d'halogène ; et
Z est représenté par la formule chimique la :
*-NR¹R² Formule chimique la,
où R¹ et R² sont chacun indépendamment sélectionnés dans le groupe constitué d'un groupe alkyle en C1 à C6 substitué ou non substitué ;
dans laquelle le composé est incorporé en une proportion de 10 à 15 % en volume par rapport au volume total de la solution d'électrolyte.
